# FASCICULE DE BREVET EUROPEEN

(11) **EP 2 371 521 B1**
(45) Date de publication et mention de la délivrance du brevet: **02.07.2014**
(21) Numéro de dépôt: 10159064.4
(22) Date de dépôt: 02.04.2010
(51) Int. Cl.: B29C 70/48, B29C 53/58, B29C 70/32, B29C 70/86, F01D 5/28, F01D 9/04, B29C 65/00, B29K 63/00, B29C 65/02

(54) **Procédé de fabrication d'un redresseur**
Verfahren zur Herstellung eines Gleichrichters
Method of manufacturing a rectifier

(43) Date de publication de la demande: 05.10.2011
(73) Titulaire: Techspace Aero S.A., 4041 Milmort (BE)
(72) Inventeur: Duchaine, Georges, 4608 Warsage (BE)
(74) Mandataire: Pronovem

(56) Documents cités:
- EP-A1- 2 204 547
- WO-A2-2008/000014
- DE-A1-102006 062 414
- FR-A1- 2 675 537
- JP-A- 10 325 303

## Description

### Objet de l'invention

La présente invention se rapporte à un procédé de fabrication d'un redresseur pour une turbomachine.

Elle se rapporte plus particulièrement à un procédé de fabrication de viroles intérieures ou extérieures composites avec aubes intégrées ou rapportées.

### Etat de la technique

Les compresseurs axiaux sont bien connus en soi et sont utilisés entre autres dans les turbomachines.

Ces compresseurs basse ou haute pression comportent plusieurs étages d'aubes tournantes qui sont séparés par des étages redresseurs qui ont pour but de repositionner le vecteur vitesse du fluide sortant de l'étage précédent avant de l'envoyer vers l'étage suivant.

Ces étages redresseurs sont constitués essentiellement d'aubes fixes, encore appelées aubes statoriques, reliant une virole extérieure à une virole intérieure, toutes deux concentriques et délimitant la zone d'écoulement d'air ou veine aérodynamique.

Les aubes statoriques comportent généralement une plateforme qui est fixée à la virole extérieure par rivetage, soudage, boulonnage, collage, etc. Des exemples d'assemblage par rivets (US 6,543,995 A) et boulons (EP 1 936 121 A) sont respectivement illustrés aux figures 1a et 1b (cf. légende).

On connaît également du document WO 2008/000014 A2 un arrangement d'aubes directrices disposées entre un anneau interne et un anneau externe. L'arrangement comprend une pluralité de segments où chaque segment d'un seul tenant est formé d'une aube directrice intégrant une partie de l'anneau externe et une partie de l'anneau interne. Chaque partie comporte des brides permettant une fixation avec une structure de turbide. Les segments sont raccordés entre eux par collage ou par le biais d'éléments de raccordement tels que des boulons ou des vis et les brides sont fixées à la structure de turbine également par l'intermédiaire de boulons ou de vis.

L'assemblage par rivets, boulons, etc. a pour inconvénient de nécessiter le perçage d'ouvertures dans la virole pour le passage des éléments de fixation, ce qui entraine une diminution de la résistance structurelle de la virole.

L'assemblage par collage a pour désavantage de ne pas pouvoir être utilisé comme unique méthode d'assemblage mais toujours en complément d'une autre méthode d'assemblage, par exemple par visserie, et ce pour assurer une meilleure tenue mécanique.

### Buts de l'invention

La présente invention vise à fournir une solution qui permette de s'affranchir des inconvénients de l'état de la technique.

La présente invention vise en particulier à réaliser un assemblage entre aubes et viroles n'affaiblissant pas la résistance mécanique de la virole.

La présente invention vise en outre à réaliser un assemblage entre aubes et viroles permettant une réparation aisée des aubes en cas de rupture.

### Résumé de l'invention

La présente invention se rapporte à un procédé de fabrication d'un redresseur composite de turbomachine comportant une virole munie d'une pluralité d'aubes statoriques, lesdites aubes statoriques comportant chacune une pale et optionnellement une plateforme, ledit procédé comportant au moins les étapes suivantes:
a) on bobine des premières couches d'un renfort sur un mandrin, ledit mandrin faisant également office de moule et comportant des parties saillantes, lesdites premières couches de renfort comportant des boutonnières disposées en regard des parties saillantes;
b) on dispose une pastille préfabriquée sur chacune des parties saillantes;
c) on bobine des dernières couches de renfort au-dessus des pastilles formant ainsi une préforme;
d) on injecte une résine dans le moule fermé contenant la préforme et on polymérise la préforme imprégnée de résine;
e) on sort du moule la préforme polymérisée et on rapporte par soudage la base de la pale ou optionnellement la plateforme de l'aube, si cette dernière en comporte une, sur chacune des pastilles.

Selon des modes particuliers de l'invention, le procédé comporte au moins une ou une combinaison appropriée des caractéristiques suivantes:
- la pastille préfabriquée et l'aube sont réalisées dans un matériau thermoplastique;
- la pastille préfabriquée et l'aube sont réalisées dans un matériau métallique;
- la pastille comporte des protubérances et/ou des aspérités, lesdites protubérances et aspérités assurant l'ancrage de la pastille dans la préforme;
- l'aube et la pastille comportent un renfort à fibres longues, moyennes ou courtes;
- dans l'étape e), l'aube est rapportée à la pastille par soudage thermoplastique;
- la résine est thermodurcissable;
- la résine est polymérisée à une température inférieure à la température de fusion de la pastille;
- la résine thermodurcissable est une résine époxyde;
- la pastille thermoplastique est en PEEK, en PEKK ou en PEI;
- le renfort comporte des tresses, des tissus ou des tissus non tissés (NCF: Non Crimp Fabrics);
- les parties saillantes comportent des pointes;
- en cas de rupture ou endommagement d'une aube, une nouvelle aube est rapportée à la pastille par soudage;
- la soudure est positionnée sur la face intérieure de la virole ou en dehors de la face intérieure de la virole.

### Brève description des figures

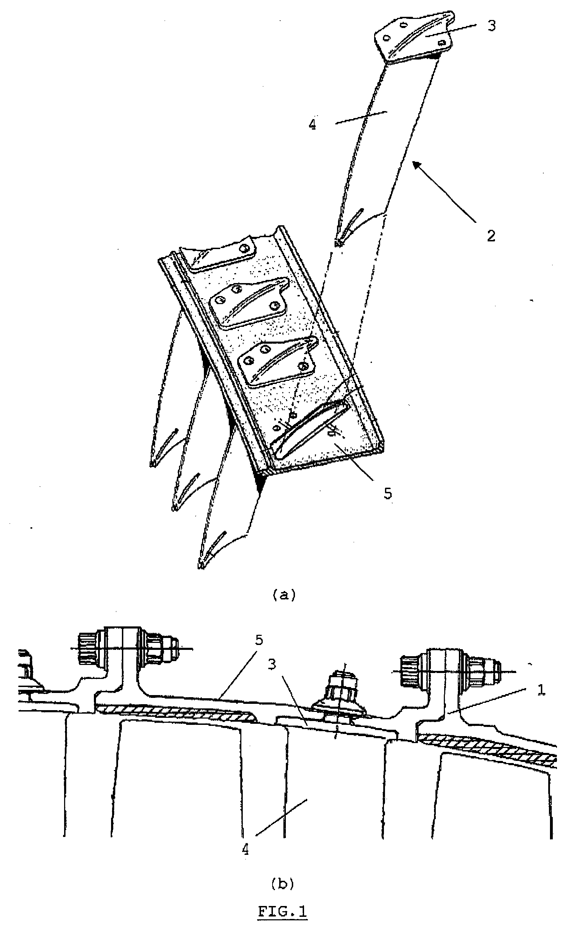

Les figures 1a et 1b, déjà mentionnées, représentent respectivement une vue tridimensionnelle et une vue en coupe d'exemples d'assemblage entre aubes statoriques et virole extérieure selon l'état de la technique (cf. légende).

La figure 2 représente une vue tridimensionnelle des aubes statoriques insérées entre les couches de renfort de la préforme de la virole extérieure selon un premier mode de réalisation de l'invention.

La figure 3 représente une vue en coupe correspondant à l'assemblage de la figure 2.

La figure 4 représente une vue de face d'une aube statorique rapportée à une pastille insérée entre les couches de renfort de la préforme de la virole extérieure selon un second mode de réalisation de l'invention.

La figure 5 représente une vue schématique de trois positionnements de la soudure entre la pastille et l'aube selon le second mode de réalisation de l'invention.

### Légende:

(1) Bride d'assemblage entre viroles extérieures
(2) Aube statorique
(3) Plateforme de l'aube
(4) Pale de l'aube
(5) Virole extérieure
(6) Premières couches du renfort de la préforme de la virole
(7) Boutonnière sur les premières couches du renfort de la préforme de la virole
(8) Dernières couches du renfort de la préforme de la virole
(9) Pastille
(10) Protubérance de la pastille
(11) Soudure

### Description détaillée de l'invention

La présente invention concerne un procédé de fabrication d'un redresseur de turbomachine et, plus particulièrement, un procédé de fabrication d'une virole avec des aubes intégrées selon un premier mode de réalisation de l'invention ou rapportées selon un second mode de réalisation de l'invention. La présente invention est illustrée pour la fabrication d'une virole extérieure mais le procédé selon l'invention s'applique également pour la fabrication d'une virole intérieure.

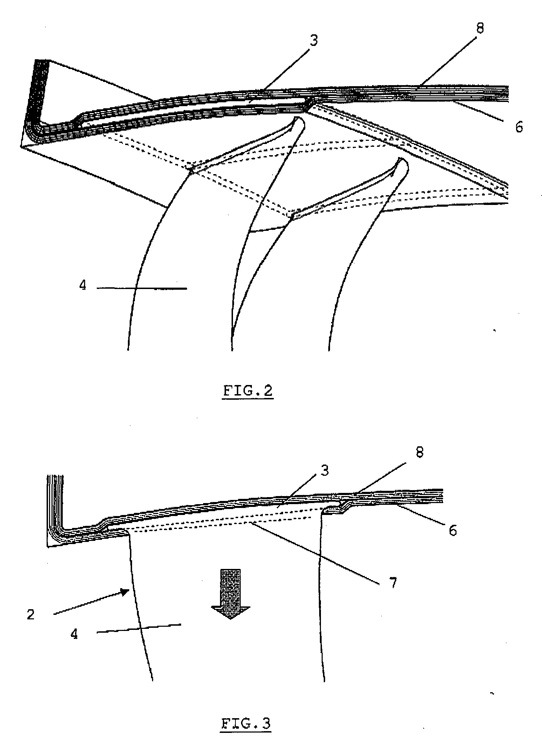

Selon le premier mode de réalisation illustré aux figures 2 et 3, le procédé comporte au moins cinq étapes. Une première étape a) consiste à bobiner les premières couches 6 d'un renfort sur un mandrin (non représenté) jouant également le rôle de moule et comportant des ajours. Les premières couches de renfort 6 comportent des boutonnières 7 disposées en regard des ajours. Dans une deuxième étape b), les aubes 2 et, plus particulièrement, les pales des aubes 4 sont insérées au travers des boutonnières 7 des premières couches 6 et des ajours du mandrin dans le sens de la flèche présentée à la figure 3. Préférentiellement, l'aube 2 comporte une plateforme 3 avec des protubérances (non représentées) servant d'ancrage mécanique. La surface de la plateforme peut également comporter des aspérités (non représentées) toujours avec l'objectif d'améliorer son ancrage. Dans une troisième étape c), les dernières couches de renfort 8 sont bobinées au-dessus des plateformes d'aubes 3 pour compléter la préforme du redresseur. Dans une quatrième étape d), le moule est fermé, une résine est injectée autour des plateformes d'aube et la préforme imprégnée est polymérisée. Une cinquième et dernière étape e) consiste à ouvrir le moule et démouler le redresseur ainsi obtenu.

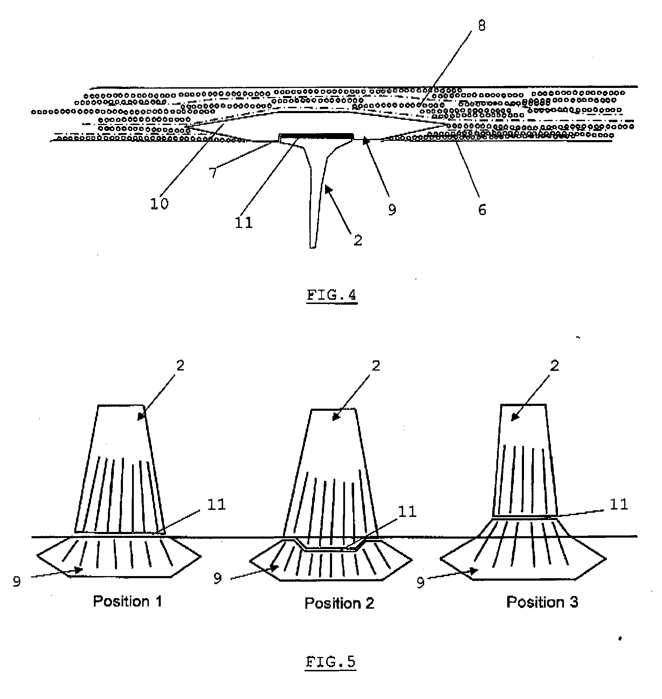

Selon le second mode de réalisation illustré à la figure 4, le procédé comporte au moins cinq étapes. Une première étape a) consiste à bobiner des premières couches d'un renfort 6 sur un mandrin (non représenté) jouant également le rôle de moule et comportant non pas des ajours mais des parties saillantes, telles que par exemple des pointes, disposées radicalement au futur emplacement des aubes. Les premières couches de renfort 6 comportent des boutonnières 7 disposées en regard des parties saillantes. Dans une deuxième étape b), des pastilles préfabriquées 9 sont disposées sur les parties saillantes. Il y a autant de pastilles que d'aubes à fixer à la virole. Selon la présente invention, la pastille 9 comporte des protubérances 10, c'est-à-dire des extensions de la pastille dans des directions axiales et circonférentielles, ces protubérances 10 posent sur les premières couches de renfort 6. En variante, la pastille comporte sur sa surface des aspérités (non représentées). Selon encore une autre variante, la pastille comporte des protubérances ainsi que des aspérités sur sa surface. Dans une troisième étape c), les dernières couches de renfort 8 sont bobinées au-dessus des pastilles 9 et de leurs protubérances 10. Dans une quatrième étape d), le moule est fermé, une résine est injectée autour des pastilles et la préforme imprégnée est polymérisée. Une cinquième étape e) consiste à ouvrir le moule et à rapporter par soudage (11: soudure) les aubes 2 sur les pastilles 9. C'est la plateforme d'aube, si cette dernière en comporte une, ou c'est la base de la pale d'aube, si l'aube ne comporte pas de plateforme, qui est soudée ou co-consolidée sur la pastille. Le soudage entre la pastille 9 et l'aube 2 peut être effectué en différentes positions telles qu'illustrées à la figure 5. Avantageusement, la soudure 11 est disposée en position 2 ou 3, c'est-à-dire en dehors de la zone la plus contrainte mécaniquement à savoir la face intérieure de la virole (face dans la veine aérodynamique).

Selon les deux modes de réalisation de l'invention susmentionnés, la résine injectée est préférentiellement une résine thermodurcissable, par exemple une résine époxyde, se présentant sous forme liquide et venant embrasser les contours et aspérités de la plateforme ou de la pastille permettant ainsi un bon ancrage de ces dernières. La polymérisation de la résine s'effectue à une température inférieure à celle de la température de fusion de l'aube ou de la pastille afin d'éviter que ces dernières ne se ramollissent. Les aubes ainsi que les pastilles peuvent être réalisées dans un matériau thermoplastique ou métallique. Préférentiellement, les aubes et les pastilles sont réalisées dans un matériau thermoplastique et, dans le second mode de réalisation, les aubes sont rapportées aux pastilles par soudage thermoplastique. A titre d'exemple, l'aube et la pastille sont réalisées avec une résine PEEK (Polyétheréthercétone), PEKK (Polyéthercétonecétone) ou PEI (Polyétherimide). Le renfort de la virole peut être constitué de tresses, de tissus ou de tissus non tissés (dits NCF pour Non Crimp Fabrics). De même, l'aube et la pastille thermoplastique comportent également un renfort qui peut être à fibres longues, moyennes ou courtes.

### Avantages du procédé selon l'invention

Le montage est simplifié car il n'est pas nécessaire d'avoir des éléments de fixation tels que rivets, boulons, etc.

La liaison entre l'aube (ou la pastille) et la virole est réalisée en une seule opération commune avec la fabrication de la virole, cela permet d'augmenter l'intégration au niveau de la fabrication.

Le procédé selon J.'invention permet la réalisation de viroles et aubes en composite. La réalisation de viroles extérieures et aubes en composite, engendre ainsi un gain de masse d'environ 13% par rapport à un assemblage soudé entre viroles extérieures et aubes réalisées respectivement en titane.

Selon le second mode de réalisation de l'invention, en cas de rupture d'une aube, une nouvelle aube peut aisément être rapportée à la pastille par soudage thermoplastique.

Le placement de la soudure en position 2 et 3 selon le second mode de réalisation permet d'assurer la continuité des fibres de l'aube (position 2) ou de la pastille (position 3) dans la zone la plus contrainte mécaniquement.

## Revendications

1. Procédé de fabrication d'un redresseur composite de turbomachine comportant une virole munie d'une pluralité d'aubes statoriques (2), lesdites aubes statoriques comportant chacune une pale (4) et optionnellement une plateforme (3), ledit procédé comportant au moins les étapes suivantes:
a) on bobine des premières couches d'un renfort (6) sur un mandrin, ledit mandrin faisant également office de moule et comportant des parties saillantes, lesdites premières couches de renfort (6) comportant des boutonnières (7) disposées en regard des parties saillantes;
b) on dispose une pastille préfabriquée (9) sur chacune des parties saillantes;
c) on bobine des dernières couches de renfort (8) au-dessus des pastilles (9) formant ainsi une préforme;
d) on injecte une résine dans le moule fermé contenant la préforme et on polymérise la préforme imprégnée de résine;
e) on sort du moule la préforme polymérisée et on rapporte par soudage la base de la pale (4) ou optionnellement la plateforme de l'aube (3), si cette dernière en comporte une, sur chacune des pastilles (9).

2. Procédé selon la revendication 1, **caractérisé en ce que** la pastille préfabriquée (9) et l'aube (2) sont réalisées dans un matériau thermoplastique.

3. Procédé selon la revendication 1, **caractérisé en ce que** la pastille préfabriquée (9) et l'aube (2) sont réalisées dans un matériau métallique.

4. Procédé selon l'une quelconque des revendications précédentes, **caractérisé en ce que** la pastille (9) comporte des protubérances (10) et/ou des aspérités, lesdites protubérances et aspérités assurant l'ancrage de la pastille dans la préforme.

5. Procédé selon la revendication 2, **caractérisée en ce que** l'aube (2) et la pastille (9) comportent un renfort à fibres longues, moyennes ou courtes.

6. Procédé selon la revendication 2, **caractérisé en ce que**, dans l'étape e), l'aube (2) est rapportée à la pastille (9) par soudage thermoplastique.

7. Procédé selon la revendication 1, **caractérisé en ce que** la résine est thermodurcissable.

8. Procédé selon la revendication 7, **caractérisé en ce que** la résine est polymérisée à une température inférieure à la température de fusion de la pastille (9).

9. Procédé selon la revendication 7, **caractérisé en ce que** la résine thermodurcissable est une résine époxyde.

10. Procédé selon la revendication 2, **caractérisé en ce que** la pastille thermoplastique (9) est en PEEK, en PEKK ou en PEI.

11. Procédé selon la revendication 1, **caractérisé en ce que** le renfort (6,8) comporte des tresses, des tissus ou des tissus non tissés (NCF: Non Crimp Fabrics).

12. Procédé selon la revendication 1, **caractérisé en ce que** les parties saillantes comportent des pointes.

13. Procédé selon la revendication 1, **caractérisé en ce que**, en cas de rupture ou endommagement d'une aube (2), une nouvelle aube (2) est rapportée à la pastille (9) par soudage.

14. Procédé selon la revendication 1, **caractérisé en ce que** la soudure (11) est positionnée sur la face intérieure de la virole ou en dehors de la face intérieure de la virole.

## Patentansprüche

1. Verfahren zur Herstellung einer Verbundleitvorrichtung einer Turbomaschine, die einen mit mehreren Statorschaufeln (2) ausgestatteten Ring aufweist, wobei die Statorschaufeln jeweils einen Flügel (4) und optional eine Plattform (3) aufweisen, wobei das Verfahren mindestens die folgenden Schritte aufweist:
a) Wickeln erster Schichten einer Verstärkung (6) auf eine Hülse, wobei die Hülse ebenfalls als Form dient und hervorstehende Teile aufweist, wobei die ersten Verstärkungsschichten (6) Löcher (7) aufweist, die gegenüber den hervorstehenden Teilen angeordnet sind,
b) Anordnen einer vorgefertigten Scheibe (9) auf jedem der hervorstehenden Teile,
c) Wickeln der letzten Verstärkungsschichten (8) über die Scheiben (9), wodurch eine Vorform entsteht,
d) Einspritzen eines Harzes in die geschlossene Form, die die Vorform enthält, und Polymerisierung der mit Harz getränkten Vorform,
e) Herausnehmen der polymerisierten Vorform aus der Form und Anbringen der Basis des Flügels (4) oder optional der Plattform der Schaufel (3), wenn Letztere eine aufweist, auf jedem der Scheiben (9) durch Schweißen.

2. Verfahren nach Anspruch 1, **dadurch gekennzeichnet, dass** die vorgefertigte Scheibe (9) und die Schaufel (2) aus einem thermoplastischen Material hergestellt sind.

3. Verfahren nach Anspruch 1, **dadurch gekennzeichnet, dass** die vorgefertigte Scheibe (9) und die Schaufel (2) aus einem metallischen Material hergestellt sind.

4. Verfahren nach einem der vorangehenden Ansprüche, **dadurch gekennzeichnet, dass** die Scheibe (9) Vorsprünge (10) und/oder Unebenheiten aufweist, wobei die Vorsprünge und Unebenheiten die Verankerung der Scheibe in der Vorform sicherstellen.

5. Verfahren nach Anspruch 2, **dadurch gekennzeichnet, dass** die Schaufel (2) und die Scheibe (9) eine Verstärkung mit langen, mittleren oder kurzen Fasern aufweisen.

6. Verfahren nach Anspruch 2, **dadurch gekennzeichnet, dass** bei Schritt e) die Schaufel (2) durch thermoplastisches Schweißen auf die Scheibe (9) angebracht wird.

7. Verfahren nach Anspruch 1, **dadurch gekennzeichnet, dass** das Harz wärmehärtend ist.

8. Verfahren nach Anspruch 7, **dadurch gekennzeichnet, dass** das Harz bei einer Temperatur polymerisiert wird, die unter der Schmelztemperatur der Scheibe (9) ist.

9. Verfahren nach Anspruch 7, **dadurch gekennzeichnet, dass** das wärmehärtende Harz ein Expoxydharz ist.

10. Verfahren nach Anspruch 2, **dadurch gekennzeichnet, dass** die thermoplastische Scheibe (9) aus PEEK, PEKK oder PEI ist.

11. Verfahren nach Anspruch 1, **dadurch gekennzeichnet, dass** die Verstärkung (6, 8) Geflechte, Gewebe oder Vliesstoffe (NCF: Non Crimp Fabrics) aufweist.

12. Verfahren nach Anspruch 1, **dadurch gekennzeichnet, dass** die hervorstehenden Teile Spitzen aufweisen.

13. Verfahren nach Anspruch 1, **dadurch gekennzeichnet, dass** bei einem Riss oder einer Beschädigung einer Schaufel (2) auf der Scheibe (9) eine neue Schaufel (2) durch Schweißen angebracht wird.

14. Verfahren nach Anspruch 1, **dadurch gekennzeichnet, dass** die Schweißnaht (11) auf der Innenseite des Rings oder außerhalb der Innenseite des Rings positioniert wird.

## Claims

1. A method for manufacturing a turbine-engine composite rectifier comprising a ferrule provided with a plurality of stator vanes (2), said stator vanes each comprising a blade (4) and optionally a platform (3), said method comprising at least the following steps:
a) first layers of a reinforcement (6) are wound on a mandrel, said mandrel also acting as a mold and comprising protruding portions, said first reinforcement layers (6) comprising buttonholes (7) positioned facing the protruding portions;
b) a prefabricated disc (9) is positioned on each of the protruding portions;
c) last reinforcement layers (8) are wound above the discs (9), thereby forming a preform;
d) a resin is injected into the closed mold with the preform and the resin-impregnated preform is polymerized;
e) the polymerized preform is taken out of the mold and the base of the blade (4) or optionally the platform of the vane (3), if the latter comprises one of them, is added by welding on each of the discs (9).

2. The method as in Claim 1, wherein the prefabricated disc (9) and the vane (2) are made in a thermoplastic material.

3. The method as in Claim 1, wherein the prefabricated disc (9) and the vane (2) are made in a metal material.

4. The method as in any of the preceding claims, wherein the disc (9) comprises protrusions (10) and/or asperities, said protrusions and asperities ensuring the anchoring of the disc in the preform.

5. The method as in Claim 2, wherein the vane (2) and the disc (9) comprise a reinforcement with long, medium or short fibers.

6. The method as in Claim 2, wherein, in step e), the vane (2) is added to the disc (9) by thermoplastic welding.

7. The method as in Claim 1, wherein the resin is a thermosetting resin.

8. The method as in Claim 7, wherein the resin is polymerized at a temperature below the melting temperature of the disc (9).

9. The method as in Claim 7, wherein the thermosetting resin is an epoxy resin.

10. The method as in Claim 2, wherein the thermoplastic disc (9) is made in PEEK, PEKK or PEI.

11. The method as in Claim 1, wherein the reinforcement (6,8) comprises braids, fabrics or non-woven fabrics (NCF: Non-Crimp Fabrics).

12. The method as in Claim 1, wherein the protruding portions comprise spikes.

13. The method as in Claim 1, wherein, in the event of breakage or damage of a vane (2), a new vane (2) is added to the disc (9) by welding.

14. The method as in Claim 1, wherein the weld (11) is positioned on the inner face of the ferrule or outside the inner face of the ferrule.
